# EUROPÄISCHE PATENTANMELDUNG

(11) **EP 0 909 950 A2**
(43) Veröffentlichungstag der Anmeldung: **21.04.1999**
(21) Anmeldenummer: 98117990.6
(22) Anmeldetag: 23.09.1998
(51) Int. Cl.: G01N 27/12

(54) **Bauelement mit planarer Leiterbahn**

(30) Priorität: 26.09.1997 DE 19742696
(71) Anmelder: SIEMENS MATSUSHITA COMPONENTS GmbH & CO. KG, 81541 München (DE)
(72) Erfinder: Kreitschitz,Oswald,Dr., 1070 Wien (AT); Fleischer, Maximilian, Dr., 85635 Höhenkirchen (DE); Meixner, Hans, Prof., 85540 Haar (DE)
(74) Vertreter: Epping, Wilhelm, Dr.-Ing.

(57) **Zusammenfassung**

Bauelement mit planarer Leiterbahn (2) die z. B. als Heizelement eines Hochtemperatur-Gassensors oder als Temperaturfühler eingesetzt werden kann und die für Dauerbetrieb bei hohen Temperaturen dadurch stabilisiert ist, daß sie auf eine extrem glatte Substratoberseite (1) aufgebracht ist, mit sehr großen Krümmungsradien strukturiert ist und aus einer Platin-Rhodium-Legierung mit 30 Gewichtsprozent Rhodiumanteil besteht.

## Beschreibung

Die vorliegende Erfindung betrifft ein Bauelement mit planaren Leiterbahnen, das insbesondere als Hochtemperaturgassensor oder Temperaturfühler verwendet werden kann.

Sensoren mit einer planaren Leiterbahnstruktur auf einer Substratoberseite werden z. B. als Gassensoren verwendet. Planare metallische Leiterbahnen auf einem Substrat, die gegen hohe Temperaturen im Bereich um 1000°C resistent sind, werden auch zur Realisierung von Infrarot-Lichtquellen oder zur Auslösung chemischer Reaktionen verwendet. Außerdem können damit besonders stabile planare Temperatursensoren hergestellt werden.

Wenn die Leiterbahnen eine Struktur von fingerförmig miteinander verzahnten Interdigitalelektroden bilden, kann damit die elektrische Leitfähigkeit einer sich darauf befindenden halbleitenden Sensorschicht gemessen werden und damit die chemische Zusammensetzung eines den Sensor überströmenden Gases festgestellt werden. Hochtemperaturgassensoren in Planartechnologie werden mittels stromdurchflossener Heizstrukturen auf die benötigten Betriebstemperaturen beheizt. Dazu werden üblicherweise Leiterbahnen verwendet, die in Dünn- oder Dickschichttechnik auf eine Oberseite des Substrates aufgebracht sind. Die als Heizung vorgesehenen Leiterbahnen können z. B. auf der Rückseite des Substrates aufgebracht sein. Statt dessen können auch die als Sensorelektroden fungierenden Leiterbahnen selbst als Heizungen verwendet werden. Falls die Leiterbahnen aus einem Metall sind, das einen ausreichend hohen Temperaturkoeffizienten der elektrischen Leitfähigkeit besitzt, kann der Widerstand der Leiterbahn auch zur Bestimmung der Sensortemperatur verwendet werden. Unabhängig davon können derartige Strukturen prinzipiell auch als kostengünstige Temperaturfühler eingesetzt werden.

Bei Temperaturen oberhalb von 600°C sind selbst Leiterbahnen aus hochschmelzenden Edelmetallen wie Gold oder Platin nicht mehr stabil. Im allgemeinen kommt es durch Diffusionsprozesse oder durch Gasphasentransport (z. B. durch Bildung flüchtiger Platinoxide bei Platinleiterbahnen, die dem Luftsauerstoff ausgesetzt werden) zu einem Materialverlust der Leiterbahn. Dadurch ergibt sich eine Verengung des Querschnittes der Leiterbahnen, die eine Änderung des elektrischen Widerstands der Leiterbahnstruktur bewirkt. Wird der elektrische Widerstand zur Bestimmung der Temperatur benutzt, so ist die gemessene Temperatur systematisch zu hoch. Wird die Heizung mit konstanter elektrischer Spannung betrieben, tritt außerdem eine Verminderung der Heizleistung auf. Bei fortschreitender Alterung der Leiterbahnen durch Materialverlust kommt es schließlich zu einer Unterbrechung der Leiterbahn, so daß die Heizung ganz ausfällt.

Durch Passivierungen, die die Leiterbahnstruktur gasdicht bedecken, wird versucht, den Materialverlust zu unterbinden. Bei kommerziellen Anbietern von Dünnschicht-Temperaturfühlern werden die Leiterbahnen mit hochschmelzenden Gläsern abgedeckt. Bei derartigen Sensoren liegt die obere Grenze der Betriebstemperatur allerdings bei etwa 600 bis 700°C. Diese Temperaturbegrenzung rührt daher, daß selbst hochschmelzende Gläser in diesem Temperaturbereich weich werden, zu kristallisieren beginnen und damit ihre Gasdichtigkeit verlieren.

Stabile Leiterbahnen für höhere Temperaturen können dadurch hergestellt werden, daß die Leiterbahn in Keramik eingesintert wird. Diese Lösung ist jedoch für Hochtemperaturgassensoren auf Ga₂O₃-Basis nicht geeignet, da die Größe des Sensors zur Minimierung der erforderlichen Heizleistung möglichst gering sein muß. Auch für Hochtemperatur-Meßfühler bietet sich diese Lösung nicht an, da auch hier die thermische Masse des Fühlers möglichst gering sein muß.

Bei Langzeitbetrieb dieser Sensoren bei Temperaturen um 950°C kommt es zu Schädigungen der Leiterbahnstruktur trotz intakter Passivierungsschicht. Diese sind strombedingt, resultieren also nicht allein aus den hohen Temperaturen, und sind auf den Mechanismus der Elektromigration zurückzuführen. Wegen der hohen Stromdichte in den als Heizung verwendeten Leiterbahnen von typisch 10⁵ A/cm² und infolge einer Erweichung des Leiterbahnmetalls bei den hohen vorherrschenden Temperaturen kommt es zu einem strombedingten Materialtransport von Atomen des Leiterbahnmetalls entlang von Korngrenzen in Stromrichtung. Dieser Materialtransport bewirkt mechanische Spannungen im Leiterbahnmaterial und führt im ungünstigen Fall zu lokaler Rißbildung. Das führt wiederum zu einer Änderung der Strompfade und erneuter Rißbildung, so daß bei Überschreiten einer gewissen kritischen Schwelle die Temperatur und die Stromdichte bis zu einem Ausfall der Sensorheizung führen können.

Aufgabe der vorliegenden Erfindung ist es, ein Bauelement mit einer planaren metallischen Leiterbahn anzugeben, die bei Betriebstemperaturen um 1000°C eine hohe Lebensdauer aufweist. Das Bauelement soll insbesondere als Hochtemperatur-Gassensor oder als Temperaturfühler realisierbar sein.

Diese Aufgabe wird mit dem Bauelement mit den Merkmalen des Anspruches 1, des Anspruches 10 bzw. des Anspruches 15 gelöst. Ausgestaltungen ergeben sich aus den abhängigen Ansprüchen.

Bei dem erfindungsgemäßen Bauelement wird die Widerstandsfähigkeit der Leiterbahn gegen langzeitige Beanspruchung bei hoher Temperatur dadurch erreicht, daß die Leiterbahn auf einer besonders ebenen, glatten Oberfläche aufgebracht wird, daß die Leiterbahn mit großen Krümmungsradien strukturiert wird oder daß die Leiterbahn aus einer Platinlegierung, vorzugsweise einer Platin-Rhodium-Legierung, hergestellt wird.

Es können auch zwei oder alle dieser Mittel gleichzeitig eingesetzt werden.

Es folgt eine genauere Beschreibung des erfindungsgemäßen Bauelementes anhand der Figuren 1 bis 5.
- Figur 1: zeigt den typischen Aufbau eine solchen Bauelementes im Querschnitt.
- Figur 2: zeigt eine schematisierte Leiterbahnstruktur in Aufsicht.
- Figuren 3, 4 und 5: zeigen erfindungsgemäße Leiterbahnen in Aufsicht.

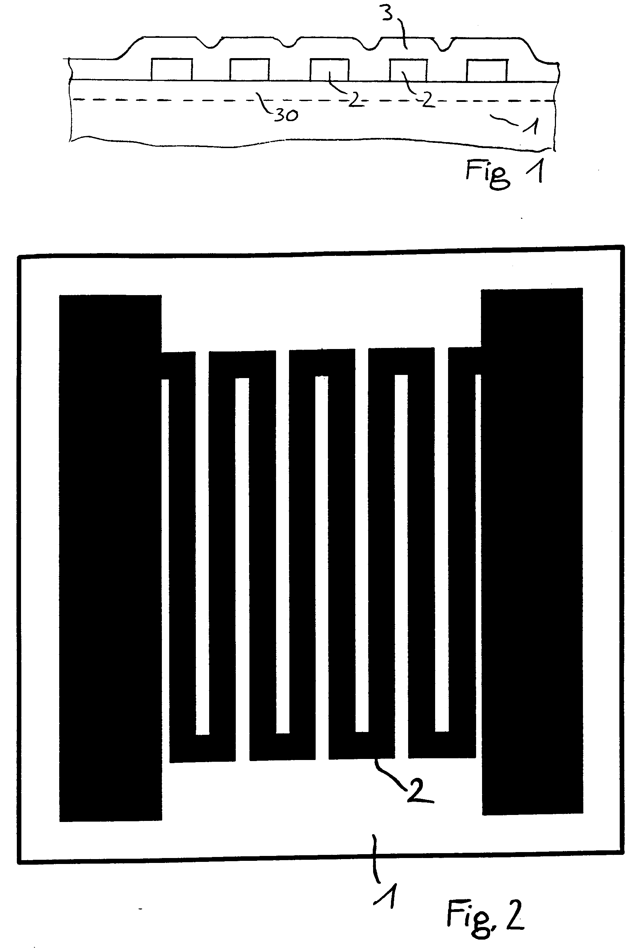

In Figur 1 ist ein Bauelement im Querschnitt dargestellt, bei dem auf einem Substrat 1 eine planare Leiterbahn 2 aufgebracht ist, die nach oben von einer Passivierungsschicht 3 gasdicht verschlossen ist. Die Passivierungsschicht soll verhindern, daß bei den vorgesehenen hohen Betriebstemperaturen das Metall der Leiterbahnen abgetragen wird und dadurch die Leiterbahnen schadhaft werden.

In Figur 2 ist im Schema in einer Aufsicht eine auf einem Substrat 1 aufgebrachte strukturierte Leiterbahn 2 dargestellt. Die Leiterbahn ist zwischen Anschlußflächen für elektrischen Anschluß in Form von Mäandern strukturiert.

Wenn diese Leiterbahn z. B. als Heizelement verwendet wird, treten als Folge eines durch den elektrischen Strom bedingten Materialtransportes in der Leiterbahn an kritischen Stellen im Laufe der Zeit Risse in der Leiterbahn auf. Derartige Risse entstehen besonders dort, wo die Leiterbahn Verengungen oder mechanische Beschädigungen, wie z. B. Kratzer, aufweist. Lokale Verdünnungen der Leiterbahn, d. h. Einschnürungen des Strompfades und lokale mechanische Spannungen in der Leiterbahn entstehen aufgrund von im Vergleich zur Dicke der Leiterbahn zu großer Rauhigkeit der Substratoberfläche. Die vielfach verwendeten keramischen Dünnschichtsubstrate auf Al₂O₃ weisen Stufen von bis zu 0,5 µm Höhe über eine Breite von 0,1 µm an der Oberseite auf, was für typische Leiterbahnen mit einer Dicke von 1 µm bis 2 µm zuviel ist. Bei einer Ausgestaltung des erfindungsgemäßen Bauelementes ist die Leiterbahn daher auf einer extrem glatten Substratoberseite aufgebracht. Solche Substrate sind z. B. Saphirsubstrate mit polierten Oberflächen, plane Quarzglassubstrate, polierte Siliziumwafer mit einer Isolationsschicht, z. B. aus SiO₂, an der Oberseite oder keramische Substrate, z. B. Al₂O₃, die durch Aufbringen einer zusätzlichen Schicht (vorzugsweise auch aus Al₂O₃ oder aus SiO₂ oder Si₃N₄) geglättet worden sind. Das Aufbringen der zusätzlichen Schicht kann durch Sputterverfahren mit einer Bias-Spannung am Substrat oder mit CVD-Verfahren (chemical vapour deposition) erfolgen. Konventionelles Sputterverfahren führt nicht zum Erfolg, da damit keine ausreichende Glättung der Oberseite erzielt wird. Zum Glätten der Substratoberseite können auch andere hochtemperaturstabile Metalloxide wie z. B. MgO, Ga₂O₃ oder ZrO₂ verwendet werden, die bei hohen Temperaturen eine im Vergleich zum Leiterbahnmetall geringe Leitfähigkeit aufweisen.

In Figur 1 ist eine oberste Schicht des Substrates durch die gestrichelt eingezeichnete Schicht 30 angedeutet. Falls diese Schicht ein Oxid ist, kann zur Verbesserung der Haftung des Metalles der Leiterbahnen auf der Substratoberseite eine extrem dünne Schicht aus einem Haftvermittler vorhanden sein. Wesentlich ist dabei, daß die Grenzfläche der Leiterbahn zum Substrat hin frei von Kratzern und extrem glatt ist. Bei den üblichen Abmessungen der Leiterbahn von 1 bis 2 µm Dicke und zwischen 50 und 200 µm Breite sollte die Rauigkeit der mit der Leiterbahn versehenen Oberseite des Substrates nicht mehr als 0,2 µm tragen. D. h., daß die Fläche der mit der Leiterbahn versehenen Oberseite des Substrates senkrecht zu der mittleren Ebene, die durch die flächige Ausdehnung dieser Substratoberseite gebildet wird, nach oben und unten an allen Stellen um höchstens 0,1 µm von dieser mittleren Ebene abweicht. Ein bei bevorzugten Ausführungen einzuhaltender oberer Grenzwert für die Rauigkeit der mit der Leiterbahn versehenen Oberseite des Substrates liegt bei 0,04 µm.

In Figur 3 ist im Schema eine auf einem Substrat 1 aufgebrachte Leiterbahn 2 dargestellt, die nur Rundungen mit relativ großem Krümmungsradius aufweist. Damit wird verhindert, daß an inneren Ecken der seitlichen Leiterbahnbegrenzungen, an denen lokale Maxima der Stromdichte vorherrschen, Risse auftreten. Um die Stromdichte zu begrenzen, werden daher nur schwache Krümmungen mit großen Krümmungsradien bei der Strukturierung der Leiterbahnen zugelassen. Bei herkömmlichen Leiterbahnstrukturen, wie sie z. B. für die Heizung eines Hochtemperatur-Gassensors eingesetzt werden, sind an inneren Ecken kleine Krümmungsradien vorhanden, die wegen der bei der Herstellung verwendeten Photolithographie ca. mindestens 2 µm betragen. Bei dem erfindungsgemäßen Bauelement betragen alle Krümmungsradien der Leiterbahn mindestens 30 µm, vorzugsweise mindestens 70 µm. Der Krümmungsradius der Leiterbahn wird dabei jeweils an der inneren Begrenzungslinie der Leiterbahn gemessen. Der minimale dort auftretende Krümmungsradius sollte nicht kleiner als 70 µm sein. Aus Platzgründen kann es aber, insbesondere bei größeren Leiterbahnbreiten, erforderlich sein, an manchen Stellen den Krümmungsradius auf Werte bis herab zu 30 µm zu reduzieren.

Wird die Leiterbahn entsprechend der Aufsicht, die in Figur 4 dargestellt ist, als Spirale strukturiert, ist der Krümmungsradius längs der Leiterbahn mit Ausnahme des Wendepunktes ganz im Inneren überall sehr groß. Die in der Figur 4 eingetragenen typischen Abmessungen sind nur als Beispiele zu verstehen und können im Einzelfall beliebig abgewandelt sein.

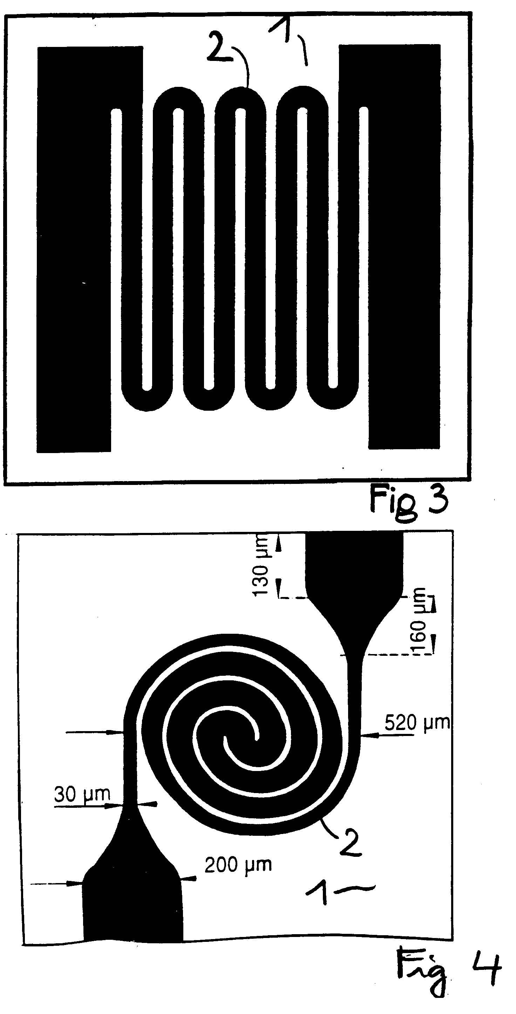

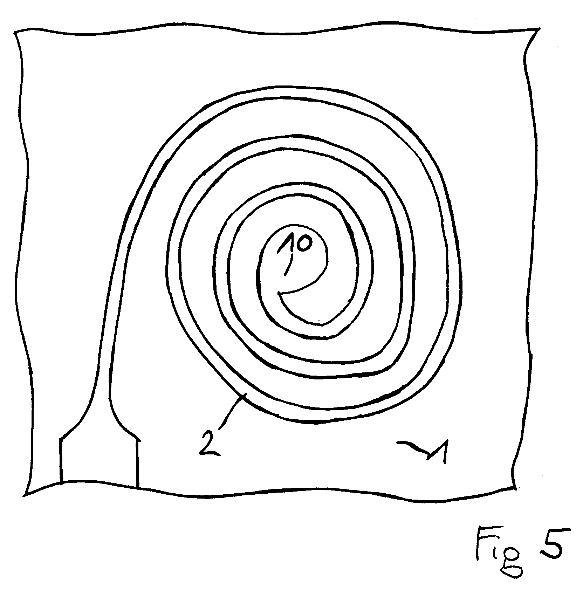

Eine weitere Möglichkeit, den Krümmungsradius zusätzlich zu vergrößern, ergibt sich durch Verwendung einer Spirale mit einer Anschlußfläche für elektrische Kontaktierung in der Mitte, wie sie in Figur 5 dargestellt ist. Die auf dem Substrat 1 aufgebrachte Leiterbahn 2 besitzt in der Mitte eine verbreiterte Anschlußfläche 10, die für den elektrischen Anschluß vorgesehen ist. Die Leiterbahn ist dann spiralig nur nach innen geführt und braucht nicht in entgegengesetztem Umlaufsinn wieder zu einer Anschlußfläche am Rand des Bauelementes herausgeführt zu werden. Eine kritische Stelle der Leiterbahn im Innern der Spirale, an der der Krümmungsradius zwangsläufig niedriger sein muß, entfällt bei dieser Anordnung gemäß Figur 5. Bei Leiterbahnen einer Dicke zwischen 0,5 µm und 10 µm kann mit einer Vergrößerung des minimalen Krümmungsradius eine wesentliche Verbesserung der Dauerhaftigkeit erzielt werden.

Eine Verbesserung ergibt sich auch dadurch, daß für derartige Leiterbahnen eine besonders geeignete Platinlegierung verwendet wird. Es wird vorzugsweise eine Legierung aus Platin und einem Platinmetall verwendet, z. B. eine Platin-Rhodium-Legierung, eine Platin-Iridium-Legierung, eine Platin-Rhenium-Legierung, eine Platin-Palladium-Legierung oder eine Platin-Ruthenium-Legierung, mit einem Platinanteil von mindestens 50 Gewichtsprozent und höchstens 90 Gewichtsprozent, besser von mindestens 65 Gewichtsprozent und höchstens 75 Gewichtsprozent. Bei einer bevorzugten Ausführungsform besteht die Leiterbahn aus einer Platin-Rhodium-Legierung mit einem Rhodiumanteil von mindestens 10 Gewichtsprozent und höchstens 50 Gewichtsprozent. Dieses Leiterbahnmetall weist eine erhöhte Beständigkeit gegenüber Elektromigration und zugleich eine optimierte Beständigkeit gegenüber Sauerstoff auf. Ein Optimalwert für den Rhodiumanteil der Legierung liegt zwischen 25 Gewichtsprozent Rhodium und höchstens 35 Gewichtsprozent Rhodium bei etwa 30 Gewichtsprozent Rhodium.

Vorteilhafte Dicken der Leiterbahn liegen zwischen 1 µm und 5 µm. Die Leiterbahn kann zusätzlich mit einer Passivierungsschicht abgedeckt sein, die vorzugsweise ein Oxid, z. B. amorphes SiO₂ oder Al₂O₃ ist. Für geringe vorgesehene Betriebtemperaturen ist keine Passivierung notwendig. Die Leiterbahnen können durch Sputtern, Elektronenstrahlverdampfen oder Laserverdampfen hergestellt werden, womit kompakte Leiterbahnschichten erhalten werden, oder auch mit Siebdrucktechnik, wobei poröse Schichten erhalten werden.

Zur Optimierung der Leiterbahnstabilität wird die Kristallitgröße in dem Metall der Leiterbahn in einer bestimmten Größenspanne gehalten. Sehr stabile Leiterbahnen ergeben sich, falls die Kristallitgrößen der Platinlegierung im Bereich von 100 nm bis 1000 nm, vorzugsweise in der Nähe von 500 nm im Bereich zwischen 450 nm und 550 nm liegen. Derartige Kristallitgrößen der Leiterbahnschicht erhält man z. B., wenn die Leiterbahnschicht nach der Abscheidung einem Temperprozeß von typischerweise einer Stunde bei 1050°C an Luft ausgesetzt wird. Durch die Verwendung der Platin-Rhodium-Legierung, vorzugsweise bei einem Platin-Rhodium-Mischverhältnis von 70 zu 30 Gewichtsprozenten, ist die Leiterbahn gegenüber einer Leiterbahn aus reinem Platin derart gehärtet, daß bei einer Temperatur von 950°C eine Erhöhung der mechanischen Festigkeit um etwa den Faktor 6 erreicht wird. Das ist ausreichend zur Unterdrückung der eingangs beschriebenen Elektromigration. Eine noch höhere Härtung ist dagegen nicht wünschenswert, da dann Haftungsprobleme der Leiterbahnschicht auf dem Substratmaterial auftreten können. Zum Legieren des Platin wird vorzugsweise Rhodium verwendet, da diese Legierung die höchste Beständigkeit gegenüber Sauerstoff aufweist. Bei dem Mischungsverhältnis von 70 zu 30 Gewichtsprozenten kommt der Materialabtrag aufgrund der Bildung der flüchtigen Oxide nahezu vollständig zum Erliegen.

Für das Substrat kommt ein elektrisch isolierendes oder nur schwach leitendes Material in Frage, wie z. B. ein Oxid (Al₂O₃), ein Nitrid (AlN), ein mit SiO₂ oder Si₃N₄ bedeckter Siliziumwafer oder ein Quarzglas. Zwischen dem Substrat und der Leiterbahn kann ggf. auch bei dieser Ausführungsform eine Haftvermittlerschicht (z. B. ein Metalloxid wie z. B. Ga₂O₃) vorhanden sein.

Es wurde erkannt, daß Al₂O₃ besondere Vorteile zur Passivierung einer als Heizerstruktur für einen Gassensor, der für den Hochtemperaturbereich vorgesehen ist, dienenden Leiterbahn aufweist. Durch Al₂O₃ wird im Gegensatz zu anderen Passivierungen, wie z. B. La₂O₃, Y₂O₃, CeO₄, TiO₂ oder Fe₃O₄, die Detektion chemisch reduzierender Gase nicht gestört. Eine bevorzugte Ausführungsform des erfindungsgemäßen Sensors umfaßt daher an sich bekannte gassensitive Elemente, z. B. eine Schicht aus einem halbleitenden Metalloxid, vorzugsweise Ga₂O₃, mit Meßelektroden, die den elektrischen Widerstand der einem Gas ausgesetzten Metalloxidschicht messen, und eine durch eine Leiterbahn gebildete Heizerstruktur zum Aufheizen des Sensors auf eine vorgesehene Temperatur, bei der eine ausreichende Sensitivität gegenüber den zu detektierenden Gasen erreicht ist, sowie eine Passivierung dieser Heizerstruktur mit einer Schicht aus Al₂O₃. Vorzugsweise ist der Gassensor so eingerichtet, daß mit der Heizerstruktur zugleich die Temperatur gemessen werden kann, damit die Temperatur auf einen konstanten Wert geregelt werden kann.

## Patentansprüche

1. Bauelement mit einer planaren Leiterbahn (2) aus Metall, die auf einer Oberseite eines Substrates (1) aufgebracht und so strukturiert ist, daß sie durch Anlegen eines elektrischen Stromes als Heizung und/oder zur Bestimmung der Temperatur betrieben werden kann,
bei dem die mit der Leiterbahn versehene Oberseite des Substrates in der Vertikalen um höchstens 0,1 µm beidseitig von einer mittleren Ebene abweicht.

2. Bauelement nach Anspruch 1,
bei dem die mit der Leiterbahn versehene Oberseite des Substrates in der Vertikalen um höchstens 0,02 µm beidseitig von einer mittleren Ebene abweicht.

3. Bauelement nach Anspruch 1 oder 2,
bei dem das Substrat ein Saphirsubstrat mit polierter Oberfläche ist.

4. Bauelement nach Anspruch 1 oder 2,
bei dem das Substrat ein planes Quarzglassubstrat ist.

5. Bauelement nach Anspruch 1 oder 2,
bei dem das Substrat Silizium mit einer Beschichtung aus SiO₂ ist und
bei dem die Leiterbahn auf dieser Beschichtung oder auf einer darauf aufgebrachten ebenen Passivierungsschicht oder Haftschicht (30) aufgebracht ist.

6. Bauelement nach Anspruch 1 oder 2,
bei dem das Substrat ein keramisches Material mit einer darauf aufgebrachten glättenden Beschichtung ist und
bei dem die Leiterbahn auf dieser Beschichtung oder auf einer darauf aufgebrachten ebenen Passivierungsschicht oder Haftschicht (30) aufgebracht ist.

7. Bauelement nach Anspruch 6,
bei dem die Beschichtung SiO₂ oder Si₃N₄ ist.

8. Bauelement nach Anspruch 6,
bei dem die Beschichtung ein hochtemperaturstabiles Metalloxid ist.

9. Bauelement nach Anspruch 8,
bei dem die Beschichtung aus einem Material aus der Gruppe von Al₂O₃, MgO, Ga₂O₃ und ZrO₂ ist.

10. Bauelement mit einer planaren Leiterbahn (2) aus Metall, die auf einem Substrat (1) aufgebracht und so strukturiert ist, daß sie durch Anlegen eines elektrischen Stromes als Heizung und/oder zur Bestimmung der Temperatur betrieben werden kann,
bei dem der minimale Krümmungsradius der Leiterbahn 30 µm ist.

11. Bauelement nach Anspruch 10,
bei dem der minimale Krümmungsradius der Leiterbahn 70 µm ist.

12. Bauelement nach Anspruch 10 oder 11,
bei der die Leiterbahn als Spirale strukturiert ist.

13. Bauelement nach Anspruch 12,
bei der die Leiterbahn eine Fläche (10) für elektrischen Anschluß in der Mitte der Spirale besitzt.

14. Bauelement nach einem der Ansprüche 1 bis 13,
bei dem die Leiterbahn eine Dicke zwischen 0,5 µm und 10 µm besitzt.

15. Bauelement mit einer planaren Leiterbahn (2) aus Metall, die auf einem Substrat (1) aufgebracht und so strukturiert ist, daß sie durch Anlegen eines elektrischen Stromes als Heizung und/oder zur Bestimmung der Temperatur betrieben werden kann,
bei dem die Leiterbahn eine Platinlegierung ist.

16. Bauelement nach Anspruch 15,
bei dem die Leiterbahn eine Legierung aus der Gruppe von Platin-Rhodium-Legierung, Platin-Iridium-Legierung, Platin-Rhenium-Legierung, Platin-Ruthenium-Legierung und Platin-Palladium-Legierung ist.

17. Bauelement nach Anspruch 16,
bei dem die Leiterbahn eine Platin-Rhodium-Legierung ist mit einem Rhodiumanteil von mindestens 10 Gewichtsprozent und höchstens 50 Gewichtsprozent.

18. Bauelement nach Anspruch 16,
bei dem die Leiterbahn eine Platin-Rhodium-Legierung ist mit einem Rhodiumanteil von mindestens 25 Gewichtsprozent und höchstens 35 Gewichtsprozent.

19. Bauelement nach Anspruch 16,
bei dem die Leiterbahn eine Platinlegierung aus der Gruppe von Platin-Iridium-Legierung, Platin-Rhenium-Legierung, Platin-Ruthenium-Legierung und Platin-Palladium-Legierung mit einem Platinanteil von mindestens 50 Gewichtsprozent und höchstens 90 Gewichtsprozent ist.

20. Bauelement nach Anspruch 16,
bei dem die Leiterbahn eine Platinlegierung aus der Gruppe von Platin-Iridium-Legierung, Platin-Rhenium-Legierung, Platin-Ruthenium-Legierung und Platin-Palladium-Legierung mit einem Platinanteil von mindestens 65 Gewichtsprozent und höchstens 75 Gewichtsprozent ist.

21. Bauelement nach einem der Ansprüche 15 bis 20,
bei dem die Leiterbahn eine Dicke zwischen 1 µm und 5 µm besitzt.

22. Bauelement nach einem der Ansprüche 15 bis 21,
bei dem die Leiterbahn eine Kristallitgröße zwischen 100 nm und 1000 nm aufweist.

23. Bauelement nach Anspruch 22,
bei dem die Kristallitgröße zwischen 450 nm und 550 nm beträgt.
